# EUROPÄISCHE PATENTANMELDUNG

(11) **EP 4 691 845 A1**
(43) Veröffentlichungstag der Anmeldung: **11.02.2026**
(21) Anmeldenummer: 25194311.4
(22) Anmeldetag: 06.08.2025
(51) Int. Cl.: B60N 2/02, B60N 2/16

(54) **FAHRZEUGSITZ**

(30) Priorität: 06.08.2024 DE 102024207462
(71) Anmelder: Adient US LLC, Plymouth, MI 48170 (US)
(72) Erfinder: ENNS, Viktor, 67661 Kaiserslautern (DE); WOLF, Christian, 67811 Dielkirchen (DE); DILL, Thomas, 67699 Heiligenmoschel (DE)
(74) Vertreter: Liedtke & Partner Patentanwälte

(57) **Zusammenfassung**

Die Erfindung betrifft einen Fahrzeugsitz (100), umfassend zumindest ein Basisgestell (200), einen Sitzrahmen (150) mit zumindest zwei in Querrichtung zueinander beabstandet angeordneten Sitzrahmenseitenteilen (152), und einen Höheneinsteller (120) mit zumindest einer Spindelantriebseinheit (130) zur Verstellung des Sitzrahmens (150) relativ zum Basisgestell (200), wobei zumindest eines der Sitzrahmenseitenteile (152) einen Sitzflächenbereich (170) und einen sich vom Sitzflächenbereich (170) in Vertikalrichtung nach oben erstreckenden Lehnenübergangsbereich (180) aufweist, wobei die Spindelantriebseinheit (130) über eine im Lehnenübergangsbereich (180) angeordnete erste Lagerstelle (132) am Sitzrahmenseitenteil (152) schwenkbar angelenkt ist.

## Beschreibung

Die Erfindung betrifft einen Fahrzeugsitz mit zumindest einem Basisgestell, einem Sitzrahmen und einem Höheneinsteller.

### Stand der Technik

Fahrzeugsitze mit unterschiedlichen Höheneinstellern sind mittlerweile in vielfältigen Ausgestaltungen bekannt, um einem Nutzer eine optimale Anpassung der Sitzposition zu ermöglichen. Die Einstellmöglichkeiten werden dabei durch relativ zueinander verstellbare Baueinheiten des Kraftfahrzeugsitzes beziehungsweise seines Untergestells erreicht, wobei die Verschiebung der Baueinheiten zueinander sowohl in motorischer als auch in manueller Weise erfolgen kann.

Aufgrund der Vielzahl an Einstellmöglichkeiten weisen Untergestelle für Fahrzeugsitze oftmals eine hohe Komplexität auf, wodurch sich ein hoher Materialaufwand sowie hohe Produktionskosten für derartige Kraftfahrzeugsitze ergeben.

### Aufgabe

Der Erfindung liegt die Aufgabe zu Grunde, einen Fahrzeugsitz der eingangs genannten Art zu verbessern, insbesondere teilereduziert, robust und kompakt auszubilden.

### Lösung

Diese Aufgabe wird erfindungsgemäß gelöst durch die angegebenen Merkmale des Anspruchs 1.

Vorteilhafte Ausgestaltungen, welche einzeln oder in Kombination miteinander eingesetzt werden können, sind Gegenstand der Unteransprüche.

Der erfindungsgemäße Fahrzeugsitz umfasst zumindest ein Basisgestell, einen Sitzrahmen mit zumindest zwei in Querrichtung zueinander beabstandet angeordneten Sitzrahmenseitenteilen, und einen Höheneinsteller mit zumindest einer Spindelantriebseinheit zur Verstellung des Sitzrahmens relativ zum Basisgestell. Dabei weist zumindest eines der Sitzrahmenseitenteile einen Sitzflächenbereich und einen sich vom Sitzflächenbereich in Vertikalrichtung nach oben erstreckenden Lehnenübergangsbereich auf, wobei die Spindelantriebseinheit über eine im Lehnenübergangsbereich angeordnete erste Lagerstelle am Sitzrahmenseitenteil schwenkbar angelenkt ist.

Dadurch, dass zumindest eines der Sitzrahmenseitenteile einen Sitzflächenbereich und einen sich vom Sitzflächenbereich in Vertikalrichtung nach oben erstreckenden Lehnenübergangsbereich aufweist und die Spindelantriebseinheit über eine im Lehnenübergangsbereich angeordnete erste Lagerstelle am Sitzrahmenseitenteil schwenkbar angelenkt ist, lässt sich die Spindelantriebseinheit zum größten Teil in einfacher Weise im Lehnenübergangsbereich des entsprechenden Sitzrahmenseitenteils unterbringen. Dadurch kann ein teilereduziertes, robustes und kompaktes Untergestell, bestehend aus Sitzrahmenseitenteil und Spindelantriebseinheit, für einen Höheneinsteller bereitgestellt werden.

Aufbauend auf einem Sitzkonzept ohne Beschlag für eine Lehnenverstellung eröffnet sich eine Möglichkeit für eine Höhenverstellung mit einer vertikalen Spindelanordnung. Erfindungsgemäß kann der Bauraum ausgenutzt werden, in dem sich im konventionellen Sitz ein Lehnenbeschlag befindet. Der Sitzrahmen, insbesondere der Fahrzeugsitz, ist also beschlagfrei ausgebildet.

Das Basisgestell kann an einem Längsversteller und/oder einem Fahrzeugboden befestigt sein.

Die Spindelantriebseinheit umfasst die erste mit dem Lehnenübergangsbereich schwenkbar verbundene Lagerstelle und eine zweite mit dem Basisgestell schwenkbar verbundene Lagerstelle. Insbesondere kann die Spindelantriebseinheit als vertikaler, das heißt vertikal angeordneter Spindelantrieb im Bauraum eines fehlenden Lehnenbeschlags ausgebildet sein.

Die Spindelantriebseinheit kann abschnittsweise an und/oder entlang einer Innenfläche des Lehnenübergangsbereichs angeordnet sein. Die Spindelantriebseinheit kann innenliegend des Sitzrahmenseitenteils angeordnet sein. Dadurch kann ein kompakter Fahrzeugsitz, insbesondere ein kompakter Sitzrahmen, in Querrichtung des Fahrzeugsitzes hergestellt werden.

Die erste Lagerstelle der Spindelantriebseinheit kann in Vertikalrichtung oberhalb einer Oberkante des Sitzrahmenseitenteils angeordnet sein. Dadurch, dass die Spindelantriebseinheit im Lehnenübergangsbereich des Sitzrahmenseitenteils und oberhalb der Oberkante des Sitzrahmenseitenteils, insbesondere oberhalb des Sitzflächenbereichs, angeordnet ist, kann eine günstige Lastableitung sowie eine Bereitstellung eines optimalen Fußraums für Rückpassagiere erzielt werden.

Der Höheneinsteller, insbesondere die Spindelantriebseinheit, kann zwischen den beiden Sitzrahmenseitenteilen des Sitzrahmens angeordnet sein. Die Spindelantriebseinheit kann in einem Package-Raum, insbesondere in einem so genannten "Underseat Package"-Raum des Sitzrahmens angeordnet sein. Dadurch wird ermöglicht, mehr Bauraum für Steuerboxen, Ventilatoren, Steckereinheiten und andere Fahrzeugsitzkomponenten und/oder Komfortvorrichtungen unterhalb des Sitzrahmens bereitzustellen. Zudem wird vermieden, dass sich Verstellkomponenten des Höheneinstellers nach außen abragen.

Die Spindelantriebseinheit kann eine in Vertikalrichtung unterhalb des Lehnenübergangsbereichs des Sitzrahmenseitenteils angeordnete zweite Lagerstelle aufweisen. Die Spindelantriebseinheit kann sich im Wesentlichen vertikal erstrecken.

Das Sitzrahmenseitenteil kann im Wesentlichen L-förmig ausgebildet sein. Das Sitzrahmenseitenteil kann mit einem Lehnenrahmen für eine Rückenlehne starr verbunden sein. Der Lehnenübergangsbereich kann ein Anbindungsbereich für einen Lehnenrahmen der Rückenlehne ausbilden. Alternativ können Sitzrahmen und Lehnenrahmen einteilig ausgebildet sein.

Zumindest der Lehnenübergangsbereich kann ein außenliegendes erstes Seitenteil und ein innenliegendes zweites Seitenteil umfassen, die miteinander verbunden sind und zwischen sich einen Aufnahmeraum bilden, wobei die Spindelantriebseinheit sich abschnittsweise durch den Aufnahmeraum des Lehnenübergangsbereichs erstreckt.

Das erste Seitenteil kann eine außenliegende Abdeckung sein. Das zweite Seitenteil kann eine innenliegende Abdeckung sein. An Randseiten der Seitenteile können diese miteinander verbunden, beispielsweise verschweißt, verschraubt und/oder vernietet sein. Dadurch, dass sich die Spindelantriebseinheit abschnittsweise durch den Aufnahmeraum des Lehnenübergangsbereichs erstreckt, kann die Spindelantriebseinheit vor äußeren Einflüssen geschützt sein. Die Begriffe "außen" und "innen" beziehen sich auf eine Anordnung in Bezug auf einen Fahrzeuginnenraum, wobei "außenliegend" einer einem Fahrzeuginnenraum zugewandten Position und "innenliegend" einer dem Fahrzeuginnenraum abgewandten Position entspricht.

Die Spindelantriebseinheit kann zumindest eine Spindel, eine Getriebeeinheit und eine Halterung umfassen, die jeweils im Aufnahmeraum zwischen den Seitenteilen des Lehnenübergangsbereichs angeordnet sein können.

Die Getriebeeinheit kann zwischen zwei Haltearmen der Halterung angeordnet sein, wobei die Halterung über zumindest einen der Haltearme an einem der Seitenteile des Lehnenübergangsbereichs schwenkbar angelenkt sein kann.

Die Spindelantriebseinheit kann zumindest einen Motor aufweisen, der an einem innenliegenden zweiten Seitenteil des Lehnenübergangsbereichs zugeordneten Haltearm befestigt ist und senkrecht von diesem abragt, wobei das innenliegende zweite Seitenteil eine zur Aufnahme des Motors korrespondierende Aussparung aufweisen kann.

Die Spindel kann ein durch die Getriebeeinheit geführtes erstes Spindelende und ein an dem Basisgestell schwenkbar angelenktes zweites Spindelende aufweisen. Dadurch, dass die Spindelantriebseinheit eine erste mit dem Lehnenübergangsbereich schwenkbar verbundene Lagerstelle und eine zweite mit dem Basisgestell schwenkbar verbundene Lagerstelle aufweist, lässt sich die Spindelantriebseinheit in einfacher Weise an nur zwei Lagerpunkten beziehungsweise Drehpunkten lagern. Dadurch wird ein teilereduziertes, robustes und kompaktes Untergestell für einen Höheneinsteller bereitgestellt.

Das Basisgestell kann ein erstes Basisseitenteil und ein in Querrichtung beabstandet angeordnetes zweites Basisseitenteil aufweisen, wobei die Spindelantriebseinheit an dem ersten Basisseitenteil schwenkbar gelagert ist und an dem zweiten Basisseitenteil eine Schwinge des Höheneinstellers schwenkbar lagerbar oder gelagert ist. Schwingen des Höheneinstellers sowie Querrohre können beliebig angeordnet werden.

Kennzeichnend für den erfindungsgemäßen Fahrzeugsitz ist, dass die Spindelantriebseinheit vollständig an und/oder entlang der Innenfläche des Lehnenübergangsbereichs und/oder im Aufnahmeraum zweier Seitenteile des Lehnenübergangsbereichs angeordnet werden kann. Mit anderen Worten: Komponenten der Spindelantriebseinheit, wie beispielsweise eine Spindel, eine Getriebeeinheit, ein Motor und eine Halterung, können auf der gleichen Seite des Sitzrahmenseitenteils angeordnet sein. Dadurch kann der Sitzrahmen beziehungsweise das Untergestell für den Fahrzeugsitz bauraumsparend ausgebildet werden.

Schwenkachsen der Lagerstellen können zueinander beabstandet angeordnet sein und parallel zueinander verlaufen. Die Spindelantriebseinheit kann um die Schwenkachsen relativ zum Sitzrahmen und zum Basisgestell drehbar gelagert sein. Dies ermöglicht eine einfache Höhenverstellung des Sitzes, wobei ergonomische Bedürfnisse einer auf dem Sitz sitzenden Person erfüllt werden können.

Die Spindelantriebseinheit kann zumindest eine Spindel umfassen, wobei eine Spindelachse der Spindel zu durch die Lagerstellen definierte Schwenkachsen entsprechend orientiert, zum Beispiel senkrecht beziehungsweise vertikal, angeordnet ist. Die Spindel kann eine Verstellrichtung definieren. Eine Getriebeeinheit der Spindelantriebseinheit kann entlang der Spindelachse bewegt werden, wobei eine Verschwenkung der Spindelantriebseinheit um die jeweilige Schwenkachse der Lagerstellen bewirkt wird. Eine Verstellung, insbesondere Höhenverstellung, des Sitzgestells, wodurch sich eine Sitzposition des Nutzers festlegen lässt, resultiert aus einer Verlagerung des Sitzrahmens gegenüber dem Basisgestell. Über beispielsweise eine durch ein vorderes und hinteres Schwingenpaar bestehende Anbindung des Sitzrahmens an dem Basisgestell besteht dabei die Möglichkeit, den Sitzrahmen zwischen einer hintersten Position und einer vordersten Position relativ zum Basisgestell zu verstellen, was eine Längspositionierung des Sitzrahmens unter gleichzeitiger Höhenänderung erlaubt.

Die Halterung kann die erste Lagerstelle und ein Ende der Spindel kann die zweite Lagerstelle ausbilden, wobei die Lagerstellen jeweils ein als Bolzen ausgebildetes Lagerelement umfassen. Zum Beispiel kann die erste Lagerstelle ein als Stufenbolzen ausgebildetes Lagerelement umfassen, welches in einer Lageröffnung im Lehnenübergangsbereich schwenkbar gelagert ist. Mittels einer Mutter kann ein abstehendes Ende des Stufenbolzens am Lehnenübergangsbereich befestigt werden.

Das Ende der Spindel kann über das Lagerelement am Basisgestell befestigt sein. Das Lagerelement der zweiten Lagerstelle kann ein Stufenbolzen sein.

Das jeweilige Lagerelement kann ein Stift, ein Zapfen oder ein Einpressbolzen oder ein Nietbolzen sein.

Die Schwingenpaare können jeweils an einem Ende mit dem Sitzrahmen und an einem anderen Ende mit dem Basisgestell und/oder einem unterhalb des Basisgestells angeordneten Längseinsteller und/oder Fahrzeugboden gelenkig verbunden sein.

Die über eine geeignete Mechanik motorisch antreibbare Spindelantriebseinheit ermöglicht es, den Sitzrahmen gegenüber dem Basisgestell zu verlagern, wobei die eingestellte Position beispielsweise aufgrund einer Selbsthemmung oder durch gegebenenfalls vorzusehende Verriegelungsmittel festgelegt werden kann.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung einen Fahrzeugsitz mit einer Längsverstelleinrichtung nach dem Stand der Technik,
- Fig. 2:: eine Seitenansicht eines erfindungsgemäßen Fahrzeugsitzes gemäß einem ersten Ausführungsbeispiel,
- Fig. 3:: eine Rückansicht des Fahrzeugsitzes gemäß dem ersten Ausführungsbeispiel,
- Fig. 4:: eine perspektivische Ansicht des Fahrzeugsitzes gemäß dem ersten Ausführungsbeispiel,
- Fig. 5:: in perspektivischer Ansicht den erfindungsgemäßen Fahrzeugsitz, und
- Fig. 6:: eine perspektivische Rückansicht des erfindungsgemäßen Fahrzeugsitzes.

Einander entsprechende Teile sind in allen Figuren mit den gleichen Bezugszeichen versehen.

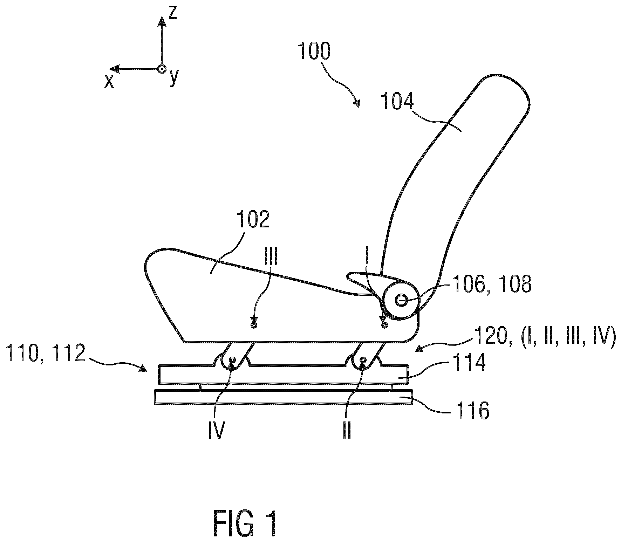

Ein in der Figur 1 zum Stand der Technik schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten, beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Die Längsverstelleinrichtung 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 ist an dem Sitzteil 102 befestigt. Das zweite Schienenelement 116 ist an einem Strukturelement eines Fahrzeugs, zum Beispiel einem Fahrzeugboden, befestigt.

Zur besseren Übersichtlichkeit wird das erste Schienenelement 114 auch als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird auch als Unterschiene 116 bezeichnet. Die Unterschiene 116 ist fest und beispielsweise mit dem Boden eines Fahrzeuges verbunden.

Des Weiteren kann zwischen dem Fahrzeugsitz 100, insbesondere zwischen dem Sitzteil 102, und der Längsverstelleinrichtung 110 und/oder einem Fahrzeugboden eine Höheneinstellkinematik, nachfolgend Höheneinsteller 120 genannt, zumindest zur Höhenverstellung des Fahrzeugsitzes 100 angeordnet sein.

Der Höheneinsteller 120 kann beidseitig des Sitzteils 102 jeweils eine Viergelenkanordnung (I, **II, III,** IV) aufweisen.

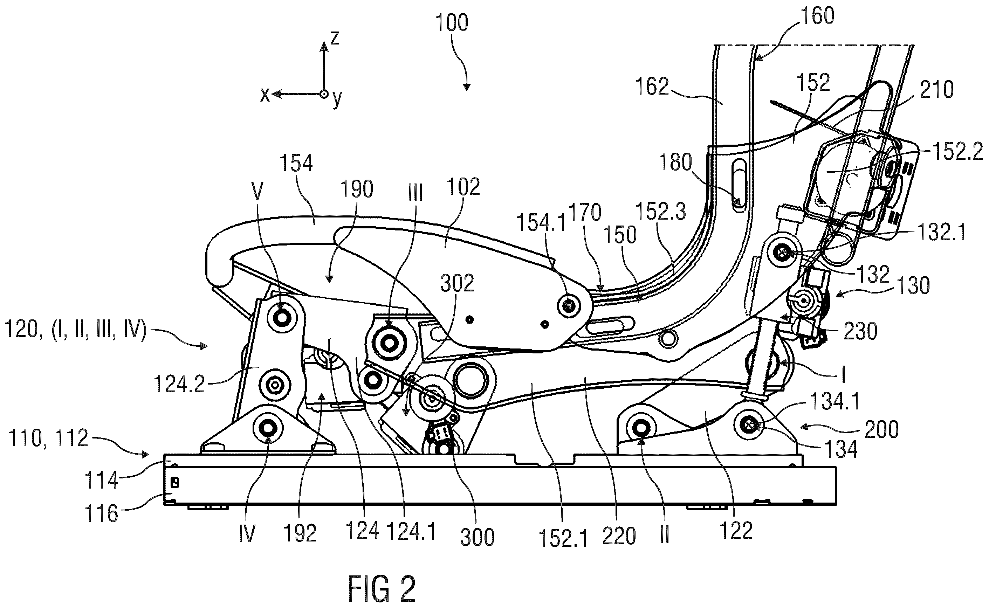

Figur 2 zeigt eine Seitenansicht eines erfindungsgemäßen Fahrzeugsitzes 100 gemäß einem ersten Ausführungsbeispiel.

Aufbauend auf einem Sitzkonzept ohne Beschlag 106, insbesondere ohne einen Lehnenbeschlag, für eine Lehnenverstellung eröffnet sich eine Möglichkeit für eine Höhenverstellung mit einer vertikalen Spindelanordnung. Dabei wird der Bauraum ausgenutzt, in dem sich im konventionellen Sitz (beispielsweise gemäß Figur 1) ein Lehnenbeschlag befindet. Ein herkömmlicher Beschlag 106 wird in einem hinteren Abschnitt des Sitzteils 102 befestigt.

Der erfindungsgemäße Fahrzeugsitz 100 umfasst zumindest ein Basisgestell 200, welches an einem Fahrzeugboden und/oder an einer Längsverstelleinrichtung 110, auch Längseinsteller genannt, befestigt sein kann. Im dargestellten Ausführungsbeispiel ist das Basisgestell 200 an einer Oberschiene 114 befestigt.

Der Fahrzeugsitz 100 umfasst weiterhin einen Sitzrahmen 150, beispielsweise eine das Sitzteil 102 ausbildende Rahmenstruktur. Der Sitzrahmen 150 umfasst zumindest zwei in Querrichtung zueinander beabstandet angeordnete Sitzrahmenseitenteile 152, die beispielsweise über zumindest ein Sitzrahmenvorderteil 154 miteinander verbunden sind. Das Sitzrahmenvorderteil 154 kann eine Oberschenkelauflage ausbilden und schwenkbar am jeweiligen Sitzrahmenseitenteil 152 angelenkt sein.

Im dargestellten Ausführungsbeispiel kann der Sitzrahmen 150 mit einem Lehnenrahmen 160 starr verbunden sein. Sitzrahmen 150 und Lehnenrahmen 160 können auch einteilig ausgebildet sein. Beispielsweise kann der Lehnenrahmen 160 zumindest zwei in Querrichtung beabstandet angeordnete Lehnenrahmenseitenteile 162 aufweisen, die jeweils mit einem entsprechenden Sitzrahmenseitenteil 152 starr verbunden sind. Das Sitzrahmenseitenteil 152 kann als Plattenteil und/oder Blechteil ausgebildet sein. Das Lehnenrahmenseitenteil 162 kann ein Rohrbauteil, beispielsweise als ein aus Blech geformtes Rohr, ausgebildet sein.

Das Sitzrahmenseitenteil 152 ist im Wesentlichen L-förmig ausgebildet, wobei ein erster Schenkel 152.1, beispielsweise ein längerer Schenkel 152.1, einen Sitzflächenbereich 170 und ein zweiter Schenkel 152.2, beispielsweise ein kürzerer Schenkel 152.2, einen Lehnenübergangsbereich 180 ausbildet. Das Lehnenrahmenseitenteil 162 kann eine mit dem Sitzrahmenseitenteil 152 entsprechende Basisform aufweisen.

Das Lehnenrahmenseitenteil 162 kann beispielsweise ein L-förmig gebildetes Rohr oder eine Stange sein. Das Lehnenrahmenseitenteil 162 kann am Lehnenübergangsbereich 180 und optional zusätzlich am Sitzflächenbereich 170 des Sitzrahmens 150 befestigt, beispielsweise verschweißt und/oder verschraubt sein. Dadurch ergibt sich durch den Entfall eines Beschlags 106 zur Lehnenverstellung und durch die Ausbildung und Anordnung des Lehnenrahmenseitenteils 162 am Sitzrahmenseitenteil 152 ein vergrößerter Bauraum im Lehnenübergangsbereich 180 des Sitzrahmenseitenteils 152.

Das rohrförmige Lehnenrahmenseitenteil 162 kann entlang eines Bereichs einer Oberkante 152.3 und/oder nahe der Oberkante 152.3 des Sitzrahmenseitenteils 152, insbesondere des Sitzflächenbereichs 170, verlaufen und befestigt sein. Dadurch ergibt sich ein Bauraum im Wesentlichen unterhalb und hinter dem Lehnenrahmenseitenteil 162 im Lehnenübergangsbereich 180.

Im dargestellten Ausführungsbeispiel ist nur eine Seite des Fahrzeugsitzes 100 gezeigt. Der Fahrzeugsitz 100 kann symmetrisch ausgebildet sein und beispielsweise beidseitig jeweils ein Sitzrahmenseitenteil 152 und ein Lehnenrahmenseitenteil 162 nach vorheriger Beschreibung aufweisen.

Der Fahrzeugsitz 100 umfasst zumindest einen Höheneinsteller 120 mit zumindest einer Spindelantriebseinheit 130 zur Verstellung des Sitzrahmens 150 relativ zum Basisgestell 200. Im dargestellten Ausführungsbeispiel ist nur eine Seite des Fahrzeugsitzes 100 gezeigt. Der Höheneinsteller 120 kann in einer Weiterbildung zwei Spindelantriebseinheiten 130 aufweisen, wobei jeweils eine Spindelantriebseinheit 130 einer der Sitzseiten zugeordnet sein kann.

Zumindest eines der Sitzrahmenseitenteile 152 weist einen Sitzflächenbereich 170 und einen sich vom Sitzflächenbereich 170 in Vertikalrichtung nach oben erstreckenden Lehnenübergangsbereich 180 auf, wobei die Spindelantriebseinheit 130 über eine im Lehnenübergangsbereich 180 angeordnete erste Lagerstelle 132 am Sitzrahmenseitenteil 150 schwenkbar angelenkt ist. Die erste Lagerstelle 132 ist insbesondere im Bereich hinter dem und/oder unterhalb des sich entlang der Oberkante 152.3 erstreckenden Lehnenrahmenseitenteils 162 angeordnet. Die erste Lagerstelle 132 ist im Bereich einer Biegung des L-förmigen Sitzrahmenseitenteils 152 angeordnet. Die erste Lagerstelle 132 kann im Schenkelverbindungsbereich beziehungsweise Schenkelübergangsbereich des L-förmig ausgebildeten Sitzrahmenseitenteils 152 angeordnet sein. Dadurch kann eine günstige Lastableitung erzielt werden.

Die Spindelantriebseinheit 130 weist weiterhin eine in Vertikalrichtung unterhalb des Lehnenübergangsbereichs 180 des Sitzrahmenseitenteils 152 angeordnete zweite Lagerstelle 134 auf. Die Spindelantriebseinheit 130 kann ein Stellantrieb sein. Die Spindelantriebseinheit 130 kann eine Vertikalspindelanordnung sein.

Schwenkachsen 132.1, 134.1 der Lagerstellen 132, 134 können zueinander beabstandet angeordnet sein und parallel zueinander verlaufen. Die Spindelantriebseinheit 130 kann um die Schwenkachsen 132.1, 134.1 relativ zum Sitzrahmen 150 und zum Basisgestell 200 drehbar gelagert sein. Dies ermöglicht eine einfache Höhenverstellung des Sitzes, wobei ergonomische Bedürfnisse einer auf dem Sitz sitzenden Person erfüllt werden können.

Die Spindelantriebseinheit 130 umfasst die erste mit dem Lehnenübergangsbereich 180 schwenkbar verbundene Lagerstelle 132 und eine mit dem Basisgestell 200 schwenkbar verbundene zweite Lagerstelle 134. Insbesondere kann die Spindelantriebseinheit 130 als vertikaler, das heißt vertikal angeordneter Stellantrieb im Bauraum eines fehlenden Lehnenbeschlags, herkömmlicherweise bestehend aus einem Beschlagoberteil und einem Beschlagunterteil, ausgebildet sein.

Die erste Lagerstelle 132 der Spindelantriebseinheit 130 ist in Vertikalrichtung oberhalb der Oberkante 152.3 des Sitzrahmenseitenteils 152 angeordnet.

Die Spindelantriebseinheit 130 ist abschnittsweise an und/oder entlang einer Innenfläche des Lehnenübergangsbereichs 180 angeordnet.

Der Höheneinsteller 120, insbesondere eine Einstellkinematik, kann als eine Viergelenk-Kinematik ausgebildet sein und eine Viergelenkanordnung (I, **II, III,** IV) aufweisen. Alternativ kann der Höheneinsteller 120 als eine Fünfgelenk-Kinematik ausgebildet sein.

Der Höheneinsteller 120 kann eine hintere erste Schwinge 122, eine vordere zweite Schwinge 124 aufweisen. Die hintere erste Schwinge 122 kann um ein erstes Drehgelenk I schwenkbar an dem Sitzrahmenseitenteil 152 und um ein zweites Drehgelenk II schwenkbar an dem Basisgestell 200 angelenkt sein. Die vordere zweite Schwinge 124 kann um ein drittes Drehgelenk III schwenkbar an dem Sitzrahmenseitenteil 152 und um ein viertes Drehgelenk IV schwenkbar an dem Basisgestell 200 angelenkt sein. Die vordere zweite Schwinge 124 kann aus zwei relativ zueinander bewegbaren, insbesondere verschwenkbaren, Schwingenteilen 124.1, 124.2 bestehen, die über ein fünftes Drehgelenk V miteinander schwenkbar verbunden sein können.

Zur Bereitstellung einer Höheneinstellfunktion kann mittels der zumindest einen Spindelantriebseinheit 130 ein Winkel zwischen der vorderen zweiten Schwinge 124 und dem Basisgestell 200 sowie ein Winkel zwischen der hinteren ersten Schwinge 122 und dem Basisgestell 200 veränderbar sein.

Durch die in ihrer Länge veränderbare vordere zweite Schwinge 124 können eine Lehneneinstellung und eine Relaxfunktion bereitgestellt werden.

Zur Bereitstellung eines Neigungseinstellers 190 des Sitzrahmens 150 und des damit verbundenen Lehnenrahmens 160 kann mittels einer weiteren Spindelantriebseinheit 192 ein Winkel zwischen den Schwingenteilen 124.1, 124.2 der vorderen zweiten Schwinge 124 sowie ein Winkel zwischen diesen und dem Sitzrahmen 150 veränderbar sein. Durch die Änderung eines Winkels zwischen den Schwingenteilen 124.1, 124.2 kann eine Länge der Schwinge 124 bewirkt werden.

Zur Bereitstellung eines Sitzflächen-Neigungseinstellers 300, kann das Sitzrahmenvorderteil 154, insbesondere in Form eines Sitzflächenpolsterträgers, um eine Drehachse 154.1, schwenkbar an dem Sitzrahmen 150 angelenkt sein. Ein Winkel zwischen dem Sitzrahmenvorderteil 154 und dem Sitzrahmen 150 kann mittels einer weiteren Spindelantriebseinheit 302 einstellbar sein.

Das Sitzrahmenseitenteil 152 kann beispielsweise zweiteilig ausgebildet sein. Das Sitzrahmenseitenteil 152 kann beispielsweise ein außenliegendes erstes Seitenteil 210 und ein innenliegendes zweites Seitenteil 220, die miteinander verbunden sind und zwischen sich einen Aufnahmeraum 230 bilden, aufweisen. Die hintere Spindelantriebseinheit 130 erstreckt sich abschnittsweise durch den Aufnahmeraum 230 des Lehnenübergangsbereichs 180.

Die erste Lagerstelle 132 kann an zumindest einem der Seitenteile 210, 220 angeordnet sein. Die Seitenteile 210, 220 können unterschiedlich ausgebildet sein, wobei die Seitenteile 210, 220 zumindest einen Überlappungsbereich zur Ausbildung eines Sitzflächenbereichs 170 und eines Lehnenübergangsbereichs 180 umfassen können. Die Seitenteile 210, 220 können derart miteinander verbunden sein, dass sie einen gemeinsamen Sitzflächenbereich 170 und einen gemeinsamen Lehnenübergangsbereich 180 ausbilden.

Die hintere erste Schwinge 122 und die vordere zweite Schwinge 124 können jeweils über das entsprechende Drehgelenk I, III am innenliegenden zweiten Seitenteil 210 schwenkbar angelenkt sein. Dadurch kann eine günstige Lastableitung erzielt werden.

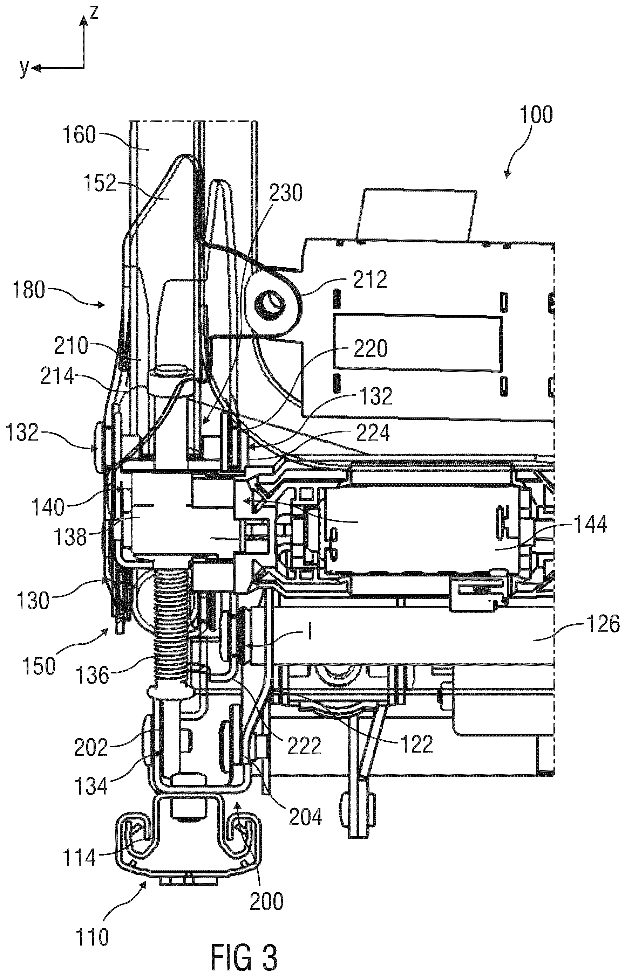

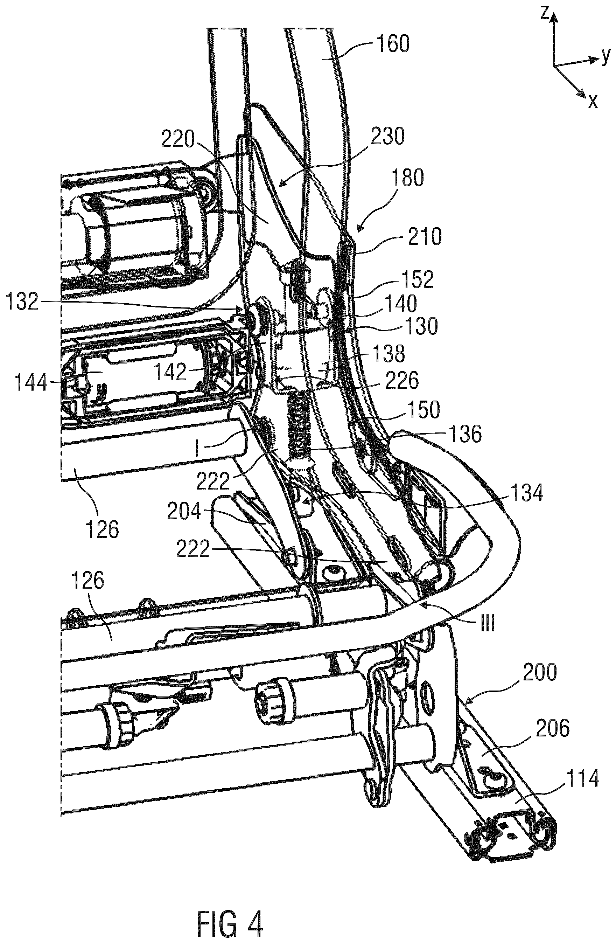

Figur 3 zeigt eine Rückansicht des Fahrzeugsitzes 100 gemäß dem ersten Ausführungsbeispiel und Figur 4 zeigt eine perspektivische Ansicht des Fahrzeugsitzes 100 gemäß dem ersten Ausführungsbeispiel.

Der Lehnenübergangsbereich 180 wird durch das außenliegende erste Seitenteil 210 und das innenliegende zweite Seitenteil 220 ausgebildet, wobei die Seitenteile 210, 220 miteinander verbunden sind und zwischen sich den Aufnahmeraum 230 bilden. Die hintere Spindelantriebseinheit 130 erstreckt sich abschnittsweise durch den Aufnahmeraum 230 des Lehnenübergangsbereichs 180. Insbesondere ist die hintere Spindelantriebseinheit 130 zwischen den beiden Seitenteilen 210, 220 angeordnet.

Die Seitenteile 210, 220 sind beispielsweise Blechteile, die abschnittsweise und/oder randseitig miteinander verbunden sind. Die Seitenteile 210, 220 können als gespiegelte Gleichteile ausgebildet sein.

Im dargestellten Ausführungsbeispiel sind die Seitenteile 210, 220 bereichsweise verschieden ausgebildet, wobei beide Seitenteile 210, 220 im Wesentlichen L-förmig ausgebildet sind. Die Seitenteile 210, 220 können aufgrund unterschiedlicher Anbindungskriterien unterschiedliche Verlängerungsabschnitte 212, 222, insbesondere Anbindungsbereiche, aufweisen.

Zum Beispiel kann das außenliegende erste Seitenteil 210 ein im Wesentlichen L-förmig ausgebildetes Grundblech 214 umfassen, welches zumindest in einem oberen Bereich einen Verlängerungsabschnitt 212 aufweist, beispielsweise zur Anbindung einer Lehnenkomfortkomponente, wie beispielsweise einer Lüftungseinheit.

Das innenliegende zweite Seitenteil 220 kann ein im Wesentlichen L-förmig ausgebildetes Grundblech 224 umfassen, welches zumindest in unteren Bereichen eine Anzahl von Verlängerungsabschnitten 222 aufweist. An einem hinteren Verlängerungsabschnitt 222 kann das innenliegende zweite Seitenteil 220 über das erste Drehgelenk I mit der hinteren ersten Schwinge 122 und optional zusätzlich mit einer hinteren Querstange 126 verbunden sein. Über die hintere Querstange 126 können beide Fahrzeugsitzseiten, insbesondere die beidseitig angeordnete Viergelenkanordnung (I, II, III, IV) zur Bewegungsübertragung miteinander verbunden werden.

Das innenliegende zweite Seitenteil 220 kann einen vorderen Verlängerungsabschnitt 222 aufweisen, wobei die vordere zweite Schwinge 124 über das erste Drehgelenk I mit dem zweiten Seitenteil 220 und optional zusätzlich mit einer vorderen Querstange 126 (in Figur 4 gezeigt) verbunden sein kann.

Über die jeweilige Querstange 126 können beide Fahrzeugsitzseiten, insbesondere die beidseitig angeordnete Viergelenkanordnung (I, II, III, IV) zur Bewegungsübertragung miteinander verbunden werden.

Die Spindelantriebseinheit 130 umfasst zumindest eine Spindel 136, eine Getriebeeinheit 138 und eine Halterung 140, die jeweils im Aufnahmeraum 230 zwischen den Seitenteilen 210, 220 im Lehnenübergangsbereich 180 angeordnet sind.

Die Getriebeeinheit 138 ist zwischen zwei Haltearmen 142 der Halterung 140 angeordnet, wobei die Halterung 140 über zumindest einen der Haltearme 142 an einem der Seitenteile 210, 220 im Lehnenübergangsbereich 180 schwenkbar angelenkt ist. Im dargestellten Ausführungsbeispiel ist die Halterung 140 und somit die Spindelantriebseinheit 130 an beiden Seitenteilen 210, 220 schwenkbar angelenkt.

Das Basisgestell 200 umfasst ein erstes Basisseitenteil 202 und ein in Querrichtung beabstandet angeordnetes zweites Basisseitenteil 204, wobei die Spindelantriebseinheit 130 an dem ersten Basisseitenteil 202 schwenkbar gelagert ist und an dem zweiten Basisseitenteil 204 die hintere erste Schwinge 122 des Höheneinstellers 120 schwenkbar lagerbar oder gelagert ist. Die Basisseitenteile 202, 204 können über ein Basisunterteil 206 miteinander verbunden sein. Über das Basisunterteil 206 können die Basisseitenteile 202, 204 an der Oberschiene 114 oder an einem Fahrzeugboden befestigt sein. Das Basisgestell 200 ist im Wesentlichen U-förmig ausgebildet.

Die Spindelantriebseinheit 130 umfasst zumindest einen Motor 144, der an einem dem innenliegenden zweiten Seitenteil 220 des Sitzrahmenseitenteils 152 im Lehnenübergangsbereich 180 zugeordneten Haltearm 142 befestigt ist und senkrecht von diesem abragt, wobei das innenliegende zweite Seitenteil 220 eine zur Aufnahme des Motors 144 korrespondierende Aussparung 226 aufweist.

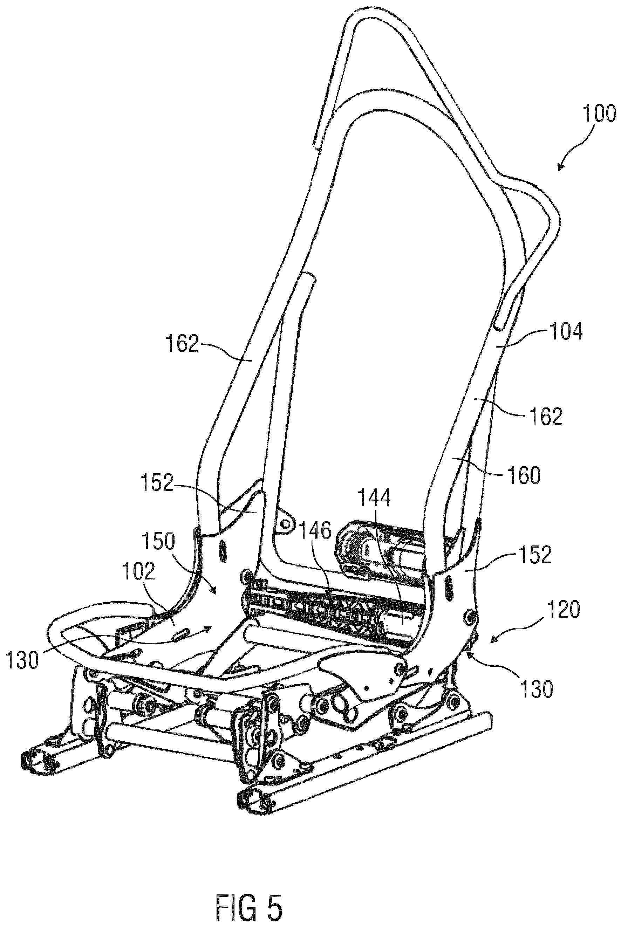

Figur 5 zeigt in perspektivischer Ansicht den erfindungsgemäßen Fahrzeugsitz 100.

Der Fahrzeugsitz 100 kann einen Höheneinsteller 120 mit jeweils beidseitig angeordneten Spindelantriebseinheiten 130 aufweisen. Der Fahrzeugsitz 100 kann einen Sitzrahmen 150 mit zwei in Querrichtung zueinander beabstandet angeordneten Sitzrahmenseitenteilen 152 umfassen. Die Sitzrahmenseitenteile 152 können jeweils einen Sitzflächenbereich 170 und einen Lehnenübergangsbereich 180 umfassen und im Wesentlichen L-förmig ausgebildet sein.

Zur Verbindung der beiden Spindelantriebseinheiten 130 kann zwischen den beiden Sitzrahmenseitenteilen 152, insbesondere im Bereich der Lehnenübergangsbereiche 180, ein Motorträger 146 angeordnet sein. Der Motorträger 146 ist insbesondere in Höhe des Lehnenübergangsbereichs 180 angeordnet und erstreckt sich in Querrichtung zwischen den beiden Sitzrahmenseitenteilen 152.Der Motorträger 146 kann eine so genannte Motorbrücke sein. Der Motorträger 146 erstreckt sich im Wesentlichen in Querrichtung. Der Motorträger 146 kann beidseitig jeweils an einem Haltearm 142 der Halterung 140 befestigt sein. Der Motorträger 146 kann eine Ausnehmung zur Aufnahme des Motors 144 aufweisen. Über den Motorträger 146 kann ein einzelner Motor 144 zum Betrieb zweier Spindelantriebseinheiten 130 verwendet werden. Durch den Motorträger 146 kann eine Übertragungswelle in einfacher Weise gehalten werden.

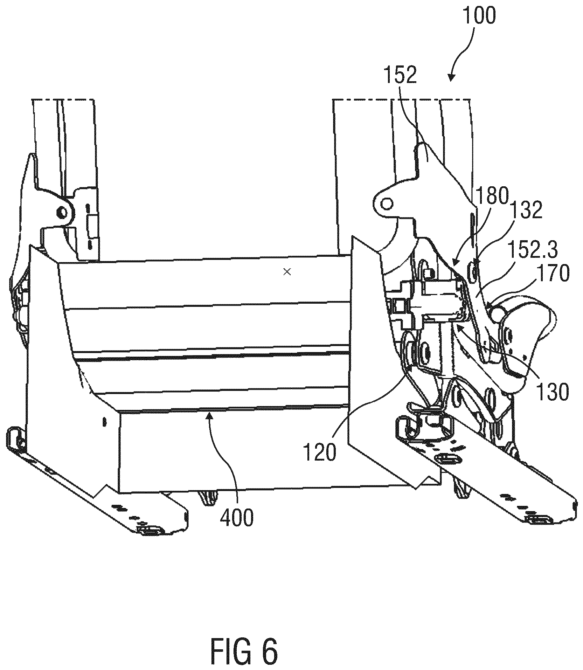

Figur 6 zeigt eine perspektivische Rückansicht des erfindungsgemäßen Fahrzeugsitzes 100.

Die erste Lagerstelle 132 der Spindelantriebseinheit 130 ist in Vertikalrichtung oberhalb der Oberkante 152.3 des Sitzrahmenseitenteils 152 angeordnet. Dadurch, dass die Spindelantriebseinheit 130 im Lehnenübergangsbereich 180 des Sitzrahmenseitenteils 152 und oberhalb der Oberkante 152.3 des Sitzrahmenseitenteils 152, insbesondere oberhalb des Sitzflächenbereichs 170, angeordnet ist, kann eine günstige Lastableitung sowie eine Bereitstellung eines optimalen Raums 400 erzielt werden, beispielsweise eines Fußraums für Rückpassagiere und/oder eines Package-Raums für Sitzfunktionsvorrichtungen und/oder Steuereinheiten etc.

### Bezugszeichenliste

- 100: Fahrzeugsitz
- 102: Sitzteil
- 104: Rückenlehne
- 106: Beschlag
- 108: Drehachse
- 110: Längsverstelleinrichtung, insbesondere Längseinsteller
- 112: Schienenanordnung
- 114: Erstes Schienenelement (Oberschiene)
- 116: Zweites Schienenelement (Unterschiene)
- 120: Höheneinsteller
- 122: hintere erste Schwinge
- 124: vordere zweite Schwinge
- 124.1, 124.2: Schwingenteil
- 126: Querstange
- 130: Spindelantriebseinheit
- 132: erste Lagerstelle
- 132.1: Schwenkachse
- 134: zweite Lagerstelle
- 134.1: Schwenkachse
- 136: Spindel
- 138: Getriebeeinheit
- 140: Halterung
- 142: Haltearm
- 144: Motor
- 146: Motorträger
- 150: Sitzrahmen
- 152: Sitzrahmenseitenteil
- 152.1: erster Schenkel
- 152.2: zweiter Schenkel
- 152.3: Oberkante
- 154: Sitzrahmenvorderteil
- 154.1: Drehachse
- 160: Lehnenrahmen
- 162: Lehnenrahmenseitenteil
- 170: Sitzflächenbereich
- 180: Lehnenübergangsbereich
- 190: Neigungseinsteller
- 192: Spindelantriebseinheit
- 200: Basisgestell
- 202, 204: Basisseitenteil
- 206: Basisunterteil
- 210: erstes Seitenteil
- 212: Verlängerungsabschnitt
- 214: Grundblech
- 220: zweites Seitenteil
- 222: Verlängerungsabschnitt
- 224: Grundblech
- 226: Aussparung
- 230: Aufnahmeraum
- 300: Sitzflächen-Neigungseinsteller
- 302: Spindelantriebseinheit
- 400: Raum
- (I, II, III, IV): Viergelenkanordnung
- I, II, III, IV, V: Drehgelenk
- x: Längsrichtung
- y: Querrichtung
- z: Vertikalrichtung

## Patentansprüche

1. Fahrzeugsitz (100), umfassend zumindest
- ein Basisgestell (200),
- einen Sitzrahmen (150) mit zumindest zwei in Querrichtung zueinander beabstandet angeordneten Sitzrahmenseitenteilen (152), und
- einen Höheneinsteller (120) mit zumindest einer Spindelantriebseinheit (130) zur Verstellung des Sitzrahmens (150) relativ zum Basisgestell (200), **dadurch gekennzeichnet, dass**
- zumindest eines der Sitzrahmenseitenteile (152) einen Sitzflächenbereich (170) und einen sich vom Sitzflächenbereich (170) in Vertikalrichtung nach oben erstreckenden Lehnenübergangsbereich (180) aufweist,
- wobei die Spindelantriebseinheit (130) über eine im Lehnenübergangsbereich (180) angeordnete erste Lagerstelle (132) am Sitzrahmenseitenteil (152) schwenkbar angelenkt ist.

2. Fahrzeugsitz (100) nach Anspruch 1,
**dadurch gekennzeichnet, dass** die Spindelantriebseinheit (130) abschnittsweise an und/oder entlang einer Innenfläche des Lehnenübergangsbereichs (180) angeordnet ist.

3. Fahrzeugsitz (100) nach Anspruch 1 oder 2,
**dadurch gekennzeichnet, dass** die erste Lagerstelle (132) der Spindelantriebseinheit (130) in Vertikalrichtung oberhalb einer Oberkante (152.3) des Sitzrahmenseitenteils (152) angeordnet ist.

4. Fahrzeugsitz (100) nach einem der Ansprüche 1 bis 3,
**dadurch gekennzeichnet, dass** die Spindelantriebseinheit (130) eine in Vertikalrichtung unterhalb des Lehnenübergangsbereichs (180) des Sitzrahmenseitenteils (152) angeordnete zweite Lagerstelle (134) aufweist.

5. Fahrzeugsitz (100) nach einem der Ansprüche 1 bis 4,
**dadurch gekennzeichnet, dass** das Sitzrahmenseitenteil (152) im Wesentlichen L-förmig ausgebildet ist.

6. Fahrzeugsitz (100) nach einem der Ansprüche 1 bis 5,
**dadurch gekennzeichnet, dass** zumindest der Lehnenübergangsbereich (180) ein außenliegendes erstes Seitenteil (210) und ein innenliegendes zweites Seitenteil (220) umfasst, die miteinander verbunden sind und zwischen sich einen Aufnahmeraum (230) bilden, wobei die Spindelantriebseinheit (130) sich abschnittsweise durch den Aufnahmeraum (230) im Lehnenübergangsbereich (180) erstreckt.

7. Fahrzeugsitz (100) nach Anspruch 6,
**dadurch gekennzeichnet, dass** die Spindelantriebseinheit (130) zumindest eine Spindel (136), eine Getriebeeinheit (138) und eine Halterung (140) umfasst, die jeweils im Aufnahmeraum (230) zwischen den Seitenteilen (210, 220) im Lehnenübergangsbereich (180) angeordnet sind.

8. Fahrzeugsitz (100) nach Anspruch 7,
**dadurch gekennzeichnet, dass** die Getriebeeinheit (138) zwischen zwei Haltearmen (142) der Halterung (140) angeordnet ist, wobei die Halterung (140) über zumindest einen der Haltearme (142) an einem der Seitenteile (210, 220) des Lehnenübergangsbereichs (180) schwenkbar angelenkt ist.

9. Fahrzeugsitz (100) nach Anspruch 8,
**dadurch gekennzeichnet, dass** die Spindelantriebseinheit (130) zumindest einen Motor (144) aufweist, der an einem dem innenliegenden zweiten Seitenteil (220) des Lehnenübergangsbereichs (180) zugeordneten Haltearm (142) befestigt ist und senkrecht von diesem abragt, wobei das innenliegende zweite Seitenteil (220) eine zur Aufnahme des Motors (144) korrespondierende Aussparung (226) aufweist.

10. Fahrzeugsitz (100) nach Anspruch 7,
**dadurch gekennzeichnet, dass** die Spindel (136) ein durch die Getriebeeinheit (138) geführtes erstes Spindelende und ein an dem Basisgestell (200) schwenkbar angelenktes zweites Spindelende aufweist.

11. Fahrzeugsitz (100) nach einem der Ansprüche 1 bis 10,
**dadurch gekennzeichnet, dass** das Basisgestell (200) ein erstes Basisseitenteil (202) und ein in Querrichtung beabstandet angeordnetes zweites Basisseitenteil (204) aufweist, wobei die Spindelantriebseinheit (130) an dem ersten Basisseitenteil (202) schwenkbar gelagert ist und an dem zweiten Basisseitenteil (204) eine Schwinge (122, 124) des Höheneinstellers (120) schwenkbar lagerbar oder gelagert ist.

12. Fahrzeugsitz (100) nach einem der Ansprüche 1 bis 11,
**dadurch gekennzeichnet, dass** ein erster Schenkel (152.1) des Sitzrahmenseitenteils (152) den Sitzflächenbereich (170) und ein zweiter Schenkel (152.2) den Lehnenübergangsbereich (180) ausbildet.

13. Fahrzeugsitz (100) nach einem der Ansprüche 1 bis 12,
**dadurch gekennzeichnet, dass** der Sitzrahmen (150) beschlagfrei ausgebildet ist.

14. Fahrzeugsitz (100) nach einem der Ansprüche 1 bis 13,
**dadurch gekennzeichnet, dass** ein Motorträger (146) zur Aufnahme eines Motors (144) der Spindelantriebseinheit (130) zwischen den beiden Sitzrahmenseitenteilen (152) angeordnet ist und die beiden Sitzrahmenseitenteile (152) miteinander verbindet.

15. Fahrzeugsitz (100) nach Anspruch 14,
**dadurch gekennzeichnet, dass** der Motorträger (146) in Höhe des Lehnenübergangsbereichs (180) angeordnet ist.
